# EUROPEAN PATENT APPLICATION

(11) **EP 1 350 482 A1**
(43) Date of publication of application: **08.10.2003**
(21) Application number: 03007689.7
(22) Date of filing: 03.04.2003
(51) Int. Cl.: A61C 7/16

(54) **Orthodontic bracket and manufacturing method thereof**

(30) Priority: 05.04.2002 JP 2002104485
(71) Applicant: DENTSPLY-SANKIN K.K., Ohtawara-shi, Tochigi 324-0036 (JP)
(72) Inventor: Shin, Yoshiharu, Ohtawara-shi, Tochigi 324-0036 (JP); Machida, Kazuo, Ohtawara-shi, Tochigi 324-0036 (JP); Nakagawa, Katsuyuki, Ohtawara-shi, Tochigi 324-0036 (JP)
(74) Representative: Steinmeister, Helmut

(57) **Abstract**

The present invention provides an orthodontic bracket having a bonding surface that has excellent adhesiveness to a tooth surface due to undercuts having been formed by plastic deformation. A bracket 1 that is bonded to a tooth surface using an adhesive for orthodontic treatment is made from a plastic, specifically a polycarbonate or a polyamide. A bonding surface 4 of the bracket 1 is constituted from recessed parts 4a and protruding parts 4b. A projecting member 6 having a tip part thereof formed into an approximately V-shaped pointed shape is pushed into an outside edge part of each protruding part 4b, whereby the protruding part 4b is pushed outward via a groove 4c. Side walls of each protruding part 4b thus spread out toward the recessed parts 4a, whereby undercuts 5 are formed in the bonding surface 4.

## Description

### BACKGROUND OF THE INVENTION

### 1. Field of the Invention

The present invention relates to an orthodontic bracket used in orthodontic treatment and a manufacturing method thereof. More specifically, the present invention relates to an orthodontic bracket having a bonding surface that has excellent adhesiveness to a tooth surface, and a manufacturing method thereof.

### 2. Description of the Related Art

The use of brackets in straightening treatment that is carried out without extracting teeth as treatment for irregular teeth is well known. In such orthodontics, brackets are bonded to the teeth, and mechanical tension in wire attached to the brackets, i.e. restoring force such as pushing force, pulling force or torsion, is applied to the teeth, whereby the positions of the teeth are gradually changed, thus straightening the teeth. The following can be given as examples of this currently commonly used method of correcting the positional relationship between individual teeth using brackets.

Metal brackets have been widely used from hitherto. Metal brackets are strong, and can be made to have a small shape. A stainless steel is used as the metal, but stainless steels containing nickel are considered to have a drawback of giving rise to an allergy, and hence recently nickel-free stainless steels have attracted attention. Moreover, titanium has suitable material properties, but has not yet come to be widely used since fine wire drawing is difficult. Metal brackets have a drawback of being poor aesthetically.

Plastic brackets were developed to improve the appearance of brackets, and are often transparent. A drawback is that the mechanical strength is low and hence the durability is poor, but advantages are that plastic brackets are inexpensive and manufacturing is easy. Ceramic brackets have the nicest appearance, but a drawback is considered to be that they may damage teeth due to being harder than teeth. Moreover, ceramic brackets may crack upon attaching the arch wire and applying external force. Single brackets are attached to the rear of teeth, and cannot be seen at all from the front, resulting in the appearance being perfect. However, single brackets have a drawback of getting in the way and thus making talking difficult. There is no limitation on the form of bracket, with each form having advantages and disadvantages.

Various constitutions have also been proposed with regard to bonding a bracket to a tooth surface, and each has advantages and disadvantages, but brackets in which the bonding surface has undercuts are attracting attention. For example, with regard to plastic brackets, there are a method in which undercuts are formed in an initial step by injection molding the bonding surface (e.g. Japanese Patent Application Laid-open No. 11-338, Japanese Patent Application Laid-open No. 11-206783, Published Japanese Translation of PCT Application No. 10-511010), a method in which the bonding surface is made to be undulating, and then the protruding parts are deformed by pressing after heating (Japanese Patent Application Laid-open No. 9-544, Japanese Patent Application Laid-open No. 2000-96103), a method in which a laser beam is shone onto the bonding surface to form an undulating surface and create undercuts (e.g. Published Japanese Translation of PCT Application No. 11-509756), and so on. However, the above cannot be said to be sufficient from either a technical perspective or a manufacturing cost perspective, and hence are not perfect. An improved method is desired.

### SUMMARTY OF THE INVENTION

The present invention aims to resolve the various problems described above, and to increase the adhesive strength to a tooth in the case of a plastic bracket. As described above, there are various types of materials for brackets, but plastic brackets are most suitable for general use both technically and economically. Regarding the above-mentioned methods of manufacturing undercuts in a plastic bracket, formation by injection molding has an advantage that a bracket can be molded with a reliable shape, but the mold for the undercut parts must be a special mold, and hence there is a problem that the cost increases.

Moreover, a method in which undercuts are injection molded by pulling away a mold in the longitudinal direction of a groove (Published Japanese Translation of PCT Application No. 10-511010) has also been proposed, but this method can only be applied to a bonding surface having a grid-shaped undulating surface; an operation of pulling away in a particular direction is specially required, and hence there are limitations on the molded shape. In the case of forming undercuts by heating to soften and then pushing the protruding parts of the bonding surface, the shape of the protruding parts is squashed by the pushing, and hence if the material is weak then the shape may not be stable, and moreover a compressive load is forcibly applied to the protruding parts, and hence buckling may occur, or if the pushing body slips sideways even slightly, then the molding may be distorted, in which case the shape after the pushing will not be stable.

Furthermore, the method in which a laser beam is used is a method in which undulations are formed in places on the bonding surface using a laser beam, but a question remains as to whether undercuts can be formed precisely over the whole surface. Brackets are small, and hence it is hard to distinguish the state of the bonding surface visually. Consequently, to keep the state of bonding stable with no fluctuation, it is necessary for the bonding surface to reliably become the shape as in theory, and in the case of carrying out mass production in particular it is necessary to stabilize the product quality, and this is strongly desired.

The present invention is art that improves and develops on problems of conventional art as above, and enables a bonding surface having undercuts of a constant shape to be manufactured; the present invention attains objects as follows.

It is an object of the present invention to provide an orthodontic bracket in which the bonding surface has undercuts of a precise shape, this being through pushing pointed projecting members against protruding parts of an undulating bonding surface of a bracket that is made of a stable plastic material so that an outside edge part of each protruding part can deform and expand out toward a recessed part, and manufacturing method therefor.

It is another object of the present invention to provide an orthodontic bracket that has a simple manufacturing process and an inexpensive constitution, and manufacturing method therefor.

The present invention attains the above objects through the following means . That is, an orthodontic bracket of a first invention is an orthodontic bracket having a joining surface that is bonded to a tooth surface using an adhesive, and is characterized in that the joining surface of the bracket has molded recessed parts and protruding parts, each of the protruding parts has an approximately V-shaped groove therein, and side walls of each of the protruding parts are expanded out toward a recessed part side via the groove, whereby the joining surface takes on an undercut shape. Through the approximate center of each of the protruding parts being pushed into, the protruding part is pushed out mechanically, and hence an outside edge part of the protruding part spreads out in a fan shape.

Undercuts can thus be formed reliably in a shape as in theory. An adhesive is applied uniformly with little unevenness onto the bonding surface having the undercuts. As a result, strong adhesiveness can be obtained. The shape of the projecting members varies according to the shape of the opposing bonding surface, but the tip of each projecting member is made to have a conical shape like an awl, a shape like the blade of a chisel, or the like. The undercuts are formed within a scope for which no drop in the strength of the bracket is brought about.

According to an orthodontic bracket of a second invention, in the case of the first invention, the bracket may be such that an outside edge part of each of the protruding parts is made to undergo plastic deformation by being pushed into by a pointed projecting member, whereby the approximately V-shaped groove is formed in each of the protruding parts, and side walls of each of the protruding parts are expanded out toward the recessed part side via the groove, and hence the joining surface takes on the undercut shape.

According to an orthodontic bracket of a third invention, in the case of the first invention, the bracket may be a plastic bracket formed from an inorganic-filler-strengthened polycarbonate. A polycarbonate is generally slightly lacking in mechanical strength, and hence there is a problem with durability, but the polycarbonate used here is strengthened with an inorganic filler. Moreover, being a synthetic resin, the polycarbonate is technically easy to manufacture, and is also excellent economically; the polycarbonate is transparent, and hence the appearance when molded is good. Examples of the inorganic filler include glass, ceramics, silica, alumina, zirconia, titania, potassium titanate, aluminum borate, wollastonite, and mica. Regarding the form of the inorganic filler, examples include fibers, whiskers, scale-like or plate-like crystals, a spherical shape, and irregular shapes. Glass fibers are preferable, but other materials and forms are also possible.

According to an orthodontic bracket of a fourth invention, in the case of the first invention, the bracket may be a plastic bracket formed from an inorganic-filler-strengthened polyamide. A polyamide is generally slightly lacking in mechanical strength, and hence there is a problem with durability, but the polyamide used here is strengthened with an inorganic filler and is flexible. Moreover, being a synthetic resin, the polyamide is technically easy to manufacture, and is also excellent economically; the polyamide is transparent, and hence the appearance when molded is good.

According to an orthodontic bracket of a fifth invention, in the case of the first invention, the undercut angle of the undercut shape of the joining surface may be 10 to 50°. This angle is the angle between the perpendicular plane containing perpendiculars rising up from the bottom surface of a recessed part (in the case that this bottom surface is a curved surface, the tangential plane touching this curved surface), and the side surface of a protruding part. Preferably, the undercut angle is 15 to 45°.

According to an orthodontic bracket of a sixth invention, in the case of the third invention, the bracket may be a plastic bracket formed from a polycarbonate having an inorganic filler content of 5 to 20% by weight. Preferably, this content is 9 to 15%. It is thus possible give the polycarbonate strength such that there is little deterioration through bending, and deformation due to tensile loads after bonding is not prone to occurring. Moreover, molding without heating is made possible, and hence manufacturing of the bracket is easy.

According to an orthodontic bracket of a seventh invention, in the case of the fourth invention, the bracket may be a plastic bracket formed from a polyamide having an inorganic filler content of 10 to 25% by weight. Preferably, this content is 15 to 20%. It is thus possible give the polyamide strength such that there is little deterioration through bending, and deformation due to tensile loads after bonding is not prone to occurring. Moreover, molding without heating is made possible, and hence manufacturing of the bracket is easy.

According to an orthodontic bracket of an eighth invention, in the case of any of the first to seventh inventions, on the joining surface of the bracket, the grooves formed by the protruding parts being pushed into may be formed in a parallel line shape or a cross shape. The form of this shape does not necessarily have to be a regular shape. The shape may be straight lines or curved lines. Moreover, the protruding parts are not limited to having a specific shape. Through the undulating shape, it is easy to apply an adhesive uniformly, and the bonding area can be increased, and hence the adhesive strength can be increased. The adhesion to the tooth surface can thus be stabilized.

A method of manufacturing an orthodontic bracket of a ninth invention is a method of manufacturing a joining surface of a plastic bracket that is bonded to a tooth surface using an adhesive for orthodontic treatment, and is characterized by comprising a molding step of molding the joining surface of the bracket such that the joining surface has recessed parts and protruding parts, and each of the protruding parts has a groove therein, and an expanding step of expanding out side walls of each of the protruding parts toward the recessed part side by pushing via the groove, whereby undercuts are formed in the joining surface of the bracket. As described earlier, through the approximate center of each of the protruding parts being pushed into, the protruding part is pushed out mechanically, and hence an outside edge part of the protruding part is spread out in a fan shape. Undercuts can thus be formed reliably in a shape as in theory.

According to a method of manufacturing an orthodontic bracket of a tenth invention, in the case of the ninth invention, the molding step of molding the joining surface may include a step of molding the joining surface by pulling off a mold at the undercut parts in a direction perpendicular to the joining surface . This is a molding method that utilizes the recovery ability of the molded article, and hence the manufacturing method can be simplified.

According to a method of manufacturing an orthodontic bracket of a eleventh invention, in the case of the ninth invention, the molding step and the expanding step may be steps in which a joining surface is formed on each of a plurality of brackets attached to a runner. Brackets still attached to a runner immediately after being removed from a mold are thus subjected to joining surface formation in a following step as is, and hence productivity is good.

According to a method of manufacturing an orthodontic bracket of a twelfth invention, in the case of the ninth invention, the molding step may be a step in which an outside edge part of each of the protruding parts is made to undergo plastic deformation by being pushed into by a pointed projecting member, thus forming an approximately V-shaped groove in each of the protruding parts, and the expanding step may be a step of pushing the outside edge part of each of the protruding parts with the pointed projecting member, thus expanding out side walls of each of the protruding parts toward the recessed part side.

According to a method of manufacturing an orthodontic bracket of a thirteenth invention, in the case of the twelfth invention, the molding step and the expanding step may be steps in which the pointed projecting members are heated, and then pushed into the outside edge parts of the protruding parts or pushed against the side walls of the grooves to cause the expansion. When the pointed projecting members are pushed and come into contact with the protruding parts, part of each of the protruding parts can thus be softened. Through this partial softening, the expansion becomes easy. Deformation can thus be carried out without changing the basic shape of the protruding parts.

### BRIEF DESCRIPTION OF THE DRAWINGS

Fig. 1 is an external view of an orthodontic bracket of the present invention;
Fig. 2 shows a section along A-A in Fig. 1, and is a sectional view of the orthodontic bracket before undercut formation;
Fig. 3 is a plan view of the bracket of Fig. 2 showing a bonding surface of the bracket;
Fig. 4 is a plan view showing a bonding surface of a bracket having provided thereon an undulating shape of parallel lines;
Fig. 5 is a sectional view along B-B in Fig. 4;
Fig. 6 shows an undercut formation process, and is an explanatory view of a state in which projecting members are waiting above the bracket;
Fig. 7 shows the undercut formation process, and is an explanatory view of a state in which the projecting members have been pressed into protruding parts on the bonding surface of the bracket;
Fig. 8 is a sectional view of the bracket after the undercut formation;
Fig. 9 is a plan view showing a state in which cross-shaped projecting members have been pressed into protruding parts surrounded on all four sides by recessed parts;
Fig. 10 is an external view of the state shown in Fig. 9;
Fig. 11 is an explanatory view showing a state in which conical projecting members are pressed into protruding parts surrounded on all four sides by recessed parts;
Fig. 12 is an explanatory view showing schematically the undercut formation process for a plurality of brackets;
Fig. 13 is a partial sectional view of a state in which a mold for molding the bracket of the embodiment of Fig. 4 is closed;
Fig. 14 is a partial sectional view showing the mold for molding the bracket of the embodiment of Fig. 4, with the movable mold being in the middle of being opened away;
Fig. 15 is a partial sectional view showing the mold for molding the bracket of the embodiment of Fig. 4, in a state in which the movable mold has been opened away;
Fig. 16 is an external view showing molded brackets on a runner;
Fig. 17 is a front view showing schematically a press for simultaneously forming brackets on a runner;
Fig. 18 is a sectional view along C-C in Fig. 17;
Fig. 19 is a partial sectional view showing a pressing process for undercutting;
Fig. 20 is an explanatory view showing a method of testing a bracket material using a specimen; and
Fig. 21 is a graph showing test results of the adhesive strength of brackets.

### DESCRIPTION OF THE PREFERRED EMBODIMENTS

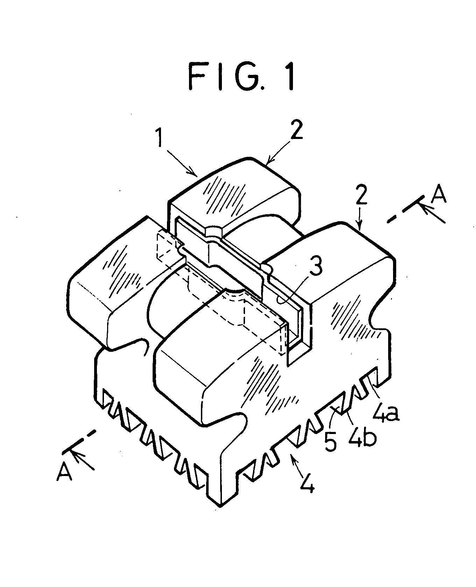

Following is a description of embodiments of the present invention with reference to the drawings. Fig. 1 is an external view of an orthodontic bracket 1 of the present invention. Fig. 1 shows a transparent synthetic resin hook-type bracket having two sets of wings 2. A gold-plated metallic groove member 3 is provided in a central part. Although not shown, arch wire is supported in this metallic groove member 3. There are many other types of such a bracket, for example a single bracket, or a bracket having a different shape such as a bracket in which the metallic groove member has an extension part, but for the embodiments of the present invention, description will be given assuming a hook-type bracket.

After the arch wire has been inserted into the metallic groove member 3, installing wire is wound around the wings 2, thus fixing the arch wire to the bracket 1. There are various types of the bracket 1; the torque, angulation and so on for the bracket 1 differ according to the site of the tooth on which the bracket 1 is to be installed, for example according to whether the bracket 1 is for a canine tooth or a central incisor, and the shape differs according to the orientation and so on of the tooth to be straightened. A lower surface of the bracket 1 is a bonding surface 4 that is bonded to the tooth surface using an adhesive. The constitution of the bracket 1 of Fig. 1 is such that recessed parts 4a and protruding parts 4b are formed on the bonding surface 4, and after this undercuts 5 are provided. The structure and function of the main body of such brackets 1 is described in detail in, for example, Japanese Patent Application Laid-open No. 9-544 and Japanese Patent Application Laid-open No. 11-206783, and hence detailed description will be omitted here. The present invention relates to the constitution of the bonding surface 4 for bonding such a bracket 1 to a tooth.

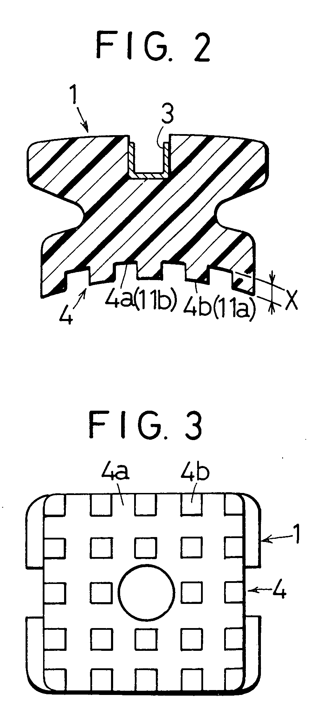

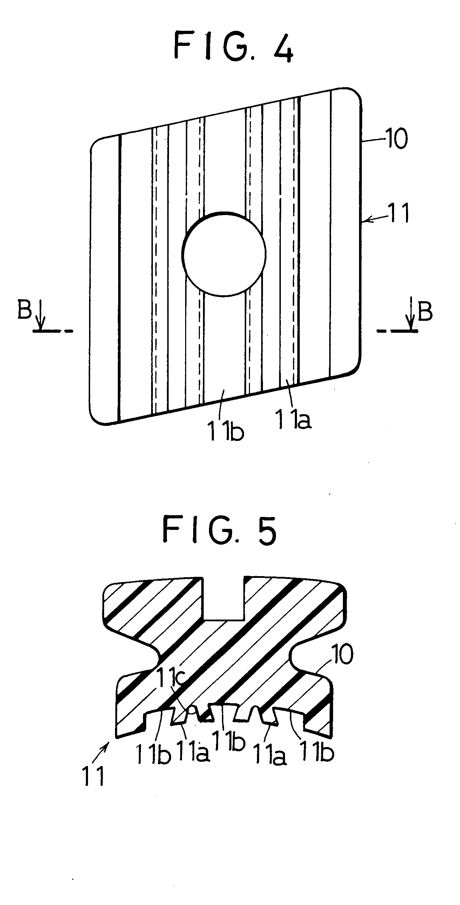

Fig. 2 shows a sectional view along A-A of the bracket 1 shown in Fig. 1. As described above, the bottom of the bracket 1 is a bonding surface 4 that is bonded to a tooth, and has a constitution in which recessed parts 4a and protruding parts 4b are arranged alternately. For explanatory purposes, Fig. 2 has been made to be a drawing that shows the state before the undercuts are formed, and hence there are slight differences to the external view of the completed state in Fig. 1. Figs. 3 and 4 are plan views showing a side of the bracket shown in Fig. 2; Fig. 3 is a drawing in which the recessed parts 4a and the protruding parts 4b are arranged in a cross shape, and Fig. 4 shows a state in which the undulating shape of a joining surface (or a bonding surface) 11 of a completed bracket 10 is formed as parallel lines.

In actual practice, the embodiment of the case of Fig. 4 is often used. Similar to the case of Fig. 3, protruding parts 11a and recessed parts 11b are formed in the joining surface 11. In Fig. 4, the constitution is such that two parallel line-shaped protruding parts 11a are provided. Fig. 5 shows a section along B-B in Fig. 4, and is a sectional view of the bracket in a state in which the undercuts have been formed. The height X of the protruding parts 4b (protruding parts 11a) (the height X of the recessed parts 4a (recessed parts 11b)) shown in Fig. 2 is preferably 0.25mm. The bracket is made of a plastic, specifically a polycarbonate or a polyamide.

The polycarbonate or polyamide has glass fibers therein, and in the case of a polycarbonate, a suitable proportion by weight of the glass fibers is 5 to 20%, preferably 9 to 15%. Moreover, in the case of a polyamide, a suitable proportion by weight of the glass fibers is 10 to 25%, preferably 15 to 20%. By including such an amount of glass fibers, the undulating bonding surface 4 of the bracket 1 can be prevented from deteriorating through bending even if pressure-formed, and moreover the strength and rigidity become such that deformation does not occur due to tensile loads. In this way, the bracket must be of a material such that loss of shape is not brought about upon carrying out pressing with a member having a pointed tip.

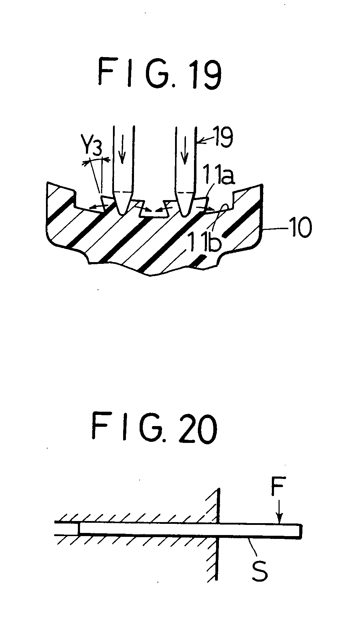

With the bracket used in the present embodiment, the usability of the material was verified through the test described below. The test was carried out on glass fiber-containing polycarbonate resins available on the market. The shape of each specimen S was 30mm×2mm×1mm. The proportion by weight of the glass fibers was made to be 5 values (0%, 10%, 15%, 20%, 30%), and the test was carried out for each case. As the test method, as shown in Fig. 20, one end of the specimen S was anchored to a fixed body, and using the same conditions for each of the specimens S having the various proportions by weight of glass fibers, using a cantilever bending test, a constant load F was applied, the bending angle until yield or breakage was changed, and a comparison of the state of deformation was carried out.

As the evaluation, the case that there was only deformation was taken as '○', the case that cracking occurred was taken as 'Δ', and the case that breakage occurred was taken as '×'. The results were as in Table 1 below. The preferable proportion by weight of glass fibers is as mentioned earlier. The results were similar for a polyamide.

**[Table 1]**

| Bending angle | 15° | 45° | 60° | 90° |
|---|---|---|---|---|
| Amount of glass Fibers | | | | |
| 0% | ○ | ○ | ○ | ○ |
| 10 | ○ | ○ | ○ | ○ |
| 15 | ○ | ○ | Δ | × |
| 20 | ○ | Δ | × | × |
| 30 | Δ | × | × | × |

An adhesive tends to eat into the polycarbonate through chemical bonding, and hence the adhesive and the bonding surface are joined together firmly. The polycarbonate has been described as containing glass fibers, but may also be one containing carbon fibers. The undercuts 5 are provided in the bonding surface 4 which has been strengthened in this way. Fig. 2 shows the state immediately after the molding of the bracket 1, before the undercuts 5 have been provided. Providing the undercuts 5 at the time of molding the bracket 1 would require a special mold as mentioned earlier. In the present embodiment this is thus avoided, and the bonding surface is made to have a molded shape as shown in Fig. 2 for which mold release is easy, i.e. when molding using a mold the bonding surface has no undercuts 5. In general, practical usage would be possible in terms of adhesive function even with the bonding surface as is, but the undercuts 5 are provided to further improve the adhesiveness.

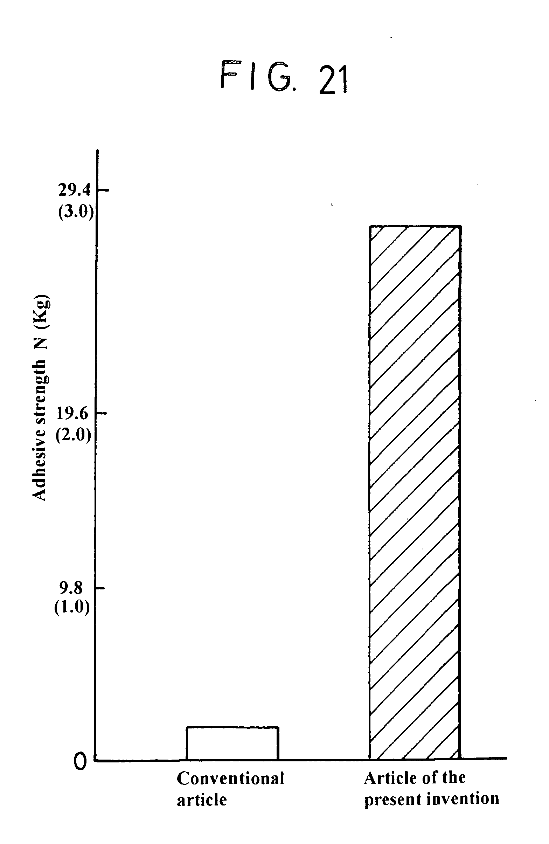

Regarding the adhesive, the effectiveness thereof was verified through the test described below. The adhesive strength was verified with a bracket made of a polycarbonate containing 15% of glass fibers. The adhesive was a photo-curing type adhesive, and treatment of the bonding surface with a primer was not carried out. For the measurement, the bracket was bonded to a metallic mesh plate and curing was carried out, and then the bracket was pulled perpendicularly, and the strength at the time of breaking away was measured. The results are shown in Fig. 21. A comparison of the adhesive strength between a conventional bracket and a bracket according to the present invention is shown. Fig. 21 shows that there is an effect whereby the strength is more than 10 times greater in the case of the bracket according to the present invention than conventionally.

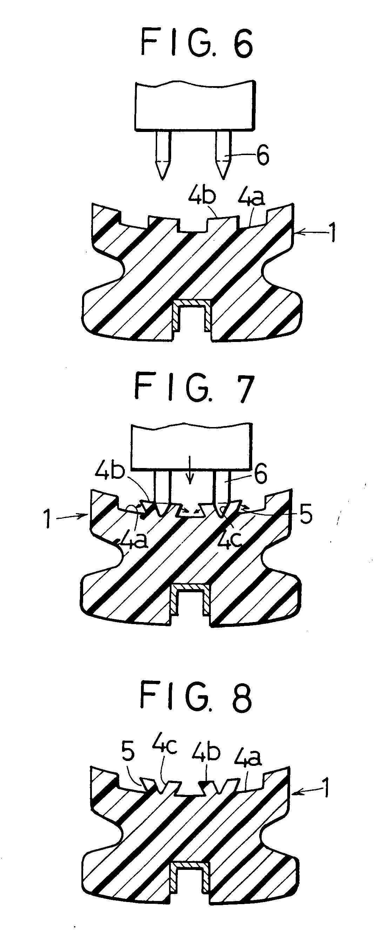

Next, a description will be given of a method of manufacturing the bracket 1 having the undercuts 5. Fig. 6 shows schematically a state in which the molded bracket 1 has been placed on a press platform, not shown, with the bonding surface 4 facing upward, and pointed projecting members 6 are waiting above to press outside edge parts of the protruding parts 4b of the bonding surface 4. The bracket 1 shown in Fig. 6 is basically the same as the one shown in Fig. 2, but to aid understanding there have been made to be two protruding parts 4b that are struck by the projecting members 6. Although not shown, the pressing operation is carried out using a publicly known press constituted from a pneumatic cylinder or the like. The projecting members 6 are provided on a head of the press, and the tip of each projecting member 6 is pointed into an approximate V-shape so as to be able to easily dig into the opposing member. The projecting members 6 may also be parallel line-shaped, or cross-shaped. The projecting members 6 may also be conical.

Fig. 7 shows a state in which the projecting members 6 have dropped down, and pressing has taken place in which the projecting members 6 dig into the outside edge parts of the protruding parts 4b of the bracket 1. Because the tip of each projecting member 6 is pointed into an approximate V-shape, the projecting member 6 digs into the outside edge part of the protruding part 4b in such a way that the outside edge part of the protruding part 4b expands out. Through the projecting member 6 digging in, a groove 4c is formed in the protruding part 4b. The outside edge part of the protruding part 4b is thus not squashed, but rather plastic deformation takes place in which the side walls of the protruding part 4b are pushed outward via the groove 4c, and hence the outside edge part is pushed out toward the recessed parts 4a as shown by the arrows.

Through this digging in of the projecting member 6, only the edges of the outside edge part of the protruding part 4b lean toward the recessed parts 4a. Base parts of the recessed parts 4a are unchanged, and hence undercuts 5 are formed toward the recessed parts 4a. The digging-in operation is carried out without softening the bracket 1. This is because filling with glass fibers has been carried out such that the digging-in operation is possible even if softening is not carried out. If the whole of the protruding part 4b were softened, then loss of shape would be prone to occurring.

Carrying out digging in and expansion in this way enables undercuts 5 of the design dimensions to be formed. Moreover, as an alternative method, it is possible to heat the projecting members 6 in advance and then carry out the pressing. In this case, only the part of the protruding part 4b that the projecting member 6 digs into is softened, and hence the undercuts 5 can be formed without the protruding part 4b losing its shape.

Fig. 8 shows the state of the bonding surface 4 of the bracket 1 after the pressing operation using the projecting members 6 has been completed. The shape of the tip of each projecting member 6 remains as is in the part that the projecting member 6 has dug into. New recessed parts, i.e. grooves 4c, are thus formed, whereby the area of application of the adhesive is increased, which contributes to increasing the adhesive strength. The undercuts 5 are formed around the recessed parts 4a of the parts that the projecting members 6 have dug into.

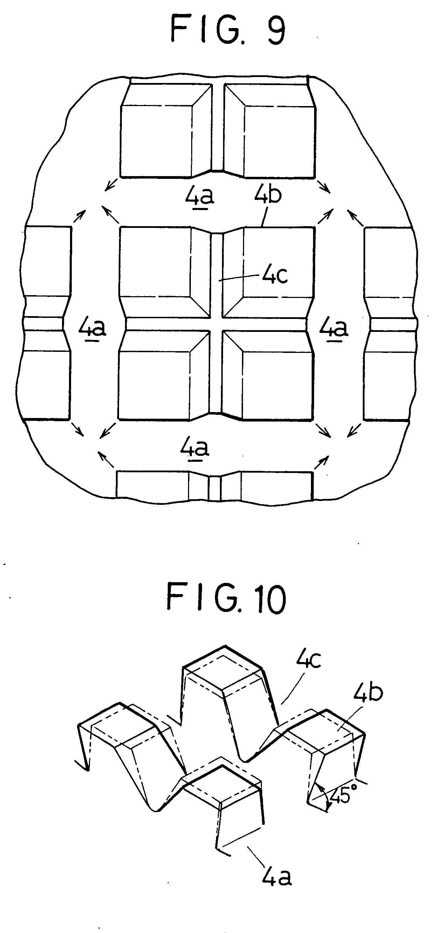

Fig. 9 is a plan view of part of the bonding surface of the bracket 1 showing an example of the undercut formation in the case that a cross-shaped pointed projecting member is pushed into the center of each protruding part 4b. To aid understanding, Fig. 10 shows an eternal view of part of the bonding surface 4 of the bracket 1 of the form of Fig. 9. In the case of this example, a projecting member having a cross-shaped tip is pushed into part of each protruding part 4b to form a groove 4c, and the side walls of the protruding part 4b are pushed via the groove 4c, whereby the side walls of the protruding part 4b expand out as shown by the arrows into a shape that leans toward the cross-shaped recessed parts 4a at an angle of about 45° (see fig.10), and hence undercuts are formed.

Specifically, the 45° angle is the angle between the perpendicular plane containing perpendiculars rising up from the bottom surface of the recessed part 4a (in the case that this bottom surface is a curved surface, the tangential plane touching this curved surface), and the side surface of the protruding part 4b. The shape of the drawing in the case that the method shown in Fig. 9 is used becomes such that the undercut parts open up slightly to the outside of the 45° direction of the recessed parts 4a, and hence the shape differs slightly from the illustrated form described above. However, it is still the case that undercuts are formed through pushing.

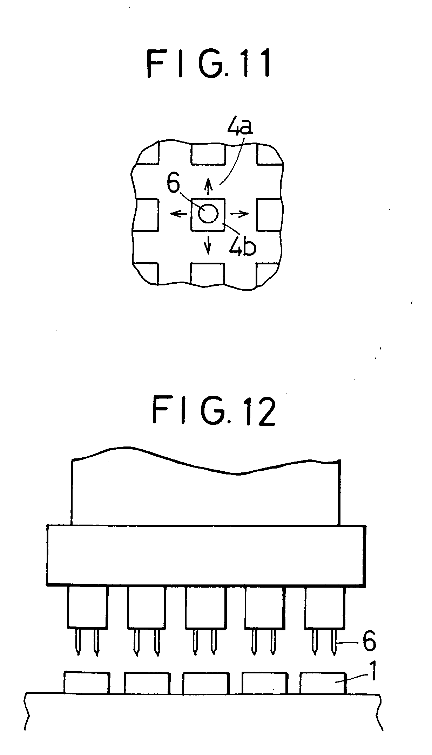

Fig. 11 is a drawing showing part of a bonding surface in which each protruding part 4b is again surrounded on all four sides by recessed parts 4a; however, in this case the tip of the projecting member 6 that is pressed into each protruding part 4b is conical in shape, and hence when the protruding part 4b is pushed and expanded out by the pressing, the periphery of the protruding part 4b expands out in the direction of the arrows toward the recessed parts 4a, whereby undercuts 5 are formed around the protruding part 4b. The shape of the tip of the projecting member 6 should be matched to the form of the opposing protruding part 4b, and if only one side of the protruding part 4b is to be expanded out, may be for example a shape like the blade of a chisel. Fig. 12 shows an example in which pluralities of brackets 1 are pressed simultaneously. Projecting members 6 are provided on the press in correspondence with the number of brackets, and the plurality of brackets 1 are pressed simultaneously. The brackets 1 are small and are produced in large quantities, and hence it is effective to mold a plurality of the brackets 1, and then carry out the pressing on all of the brackets 1 together before separating the brackets 1.

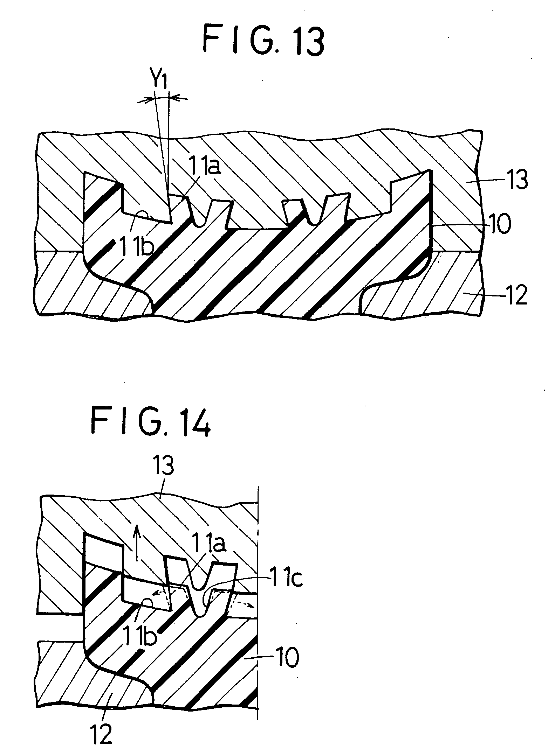

Fig. 13 shows an example of molding the bracket of Fig. 4, and shows the constitution of part of a mold for molding the bracket 10, which has recessed parts 11b and protruding parts 11a on the joining surface 11. The drawing shows a state in which a movable mold 13 has been closed onto a fixed mold 12, and shows a state in which the bracket 10 has been molded by injection molding. The movable mold 13 has provided therein approximately V-shaped projecting parts corresponding to the projecting members described earlier. Regarding the relationship between the protruding parts 11a and the recessed parts 11b, undercuts are formed in which the outside edge part of each protruding part 11a leans slightly into a recessed part 11b as shown by 'Y1' in Fig. 13. To form these undercuts, the projecting parts of the movable mold 13 must encroach into the protruding parts 11a, whereby the angle represented by Y1 which results in the undercuts becomes 5 to 20°. Specifically, this angle of 5 to 20° is the angle between the perpendicular plane containing perpendiculars rising up from the bottom surface of the recessed part 11b (in the case that this bottom surface is a curved surface, the tangential plane touching this curved surface), and the side surface of the protruding part 11a. This formation of an undercut state is applied to each of the side surfaces, i.e. 4 places, for each protruding part 11a.

Next, the movable mold 13 is opened away from the joining surface 11 of the bracket 10 in a perpendicular direction. The state in the middle of opening away the movable mold 13 is shown in the partial sectional view of Fig. 14. In the present embodiment, a polyamide is used for the bracket 10, and the bracket 10 is flexible and elastic immediately after the molding. The movable mold 13 is pulled away in the perpendicular direction from the joining surface 11 as shown by the arrow in Fig. 14 before the polyamide completely hardens. At this time, parts of the movable mold 13 forcibly push open the undercut parts, i.e. the tip parts of the protruding parts 11a, as shown by the arrow in the drawing, and the movable mold 13 is pulled away to the outside. When the movable mold 13 is pulled away, the protruding parts 11a are pushed toward grooves 11c that have been formed by the approximately V-shaped projecting parts.

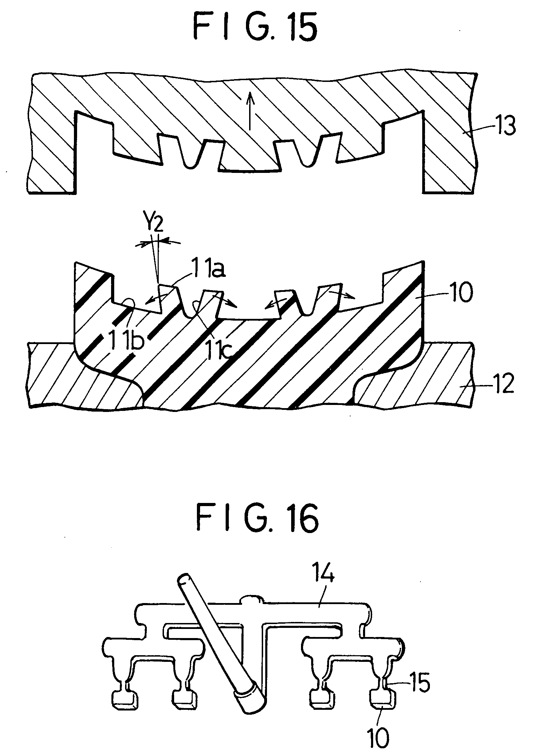

Next, as shown in Fig. 15, when the movable mold 13 is completely opened away, the outside edge part of each protruding part 11a returns from the groove 11c side to the recessed part 11b side as shown by the arrows. The recovered angle Y2 should ideally be the same as the angle Y1 of the mold shape, but in actual practice Y2 is a smaller angle than Y1. Nevertheless, undercuts are formed. Even as is, the joining surface 11 produced thus has undercuts formed therein, albeit imperfectly. However, there is a lack of reliability compared with theoretically. Next, although not shown in the drawings, part of the fixed mold 12 is shifted sideways, thus completely releasing the bracket from the mold.

Brackets 10 molded in this way have the shape shown in Fig. 16. In the state shown in Fig. 16, the brackets 10 have not yet been detached from a runner 14. In this state after opening the mold, the brackets 10 also have sprue parts attached thereto. The brackets 10 are held in a state suspended from gate parts 15 at tips of the runner 14.

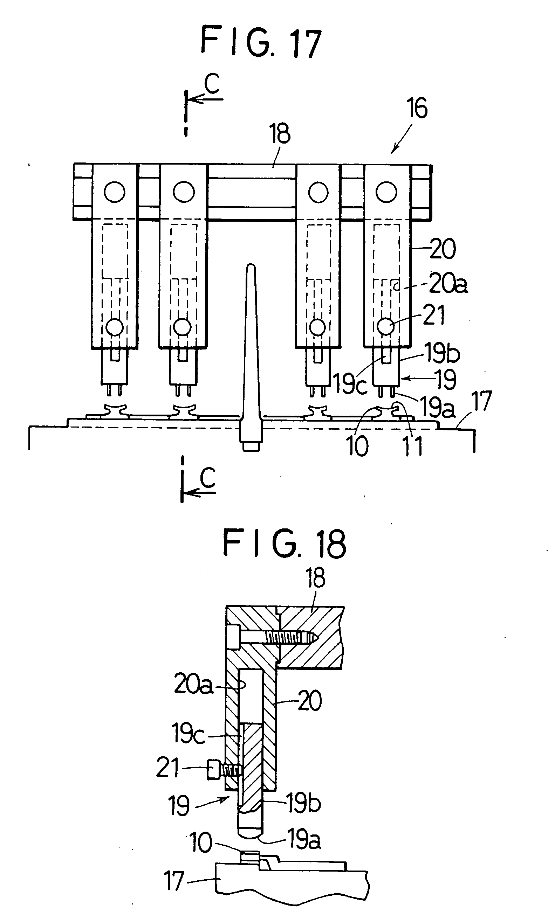

Next, a description will be given of a process for reliably forming the undercuts. Figs. 17 and 18 are schematic views showing the constitution of a forming apparatus for this purpose. Fig. 18 is a sectional view along C-C in Fig. 17. The forming apparatus is a press 16; formers provided above forming-undergoing articles placed on a platform 17 are dropped down using a publicly known driving apparatus that is pneumatic or the like, whereby forming is carried out in which the formers push into the forming-undergoing articles. In the present embodiment, brackets 10 on a runner 14 as shown in Fig. 16 are placed on the platform 17 with the joining surfaces 11 facing upward. The platform 17 placement shape is determined such that the position is settled in accordance with the shape of the brackets 10 and the runner 14.

Once the placement position has been settled, the brackets 10 and so on are fixed to the platform 17 using a fixing apparatus, not shown. A head 18 is provided above the platform 17. Approximately V-shaped projecting members 19 are provided on the head 18 facing downward. Tips 19a of the projecting members 19 are pointed so as to be able to dig into the outside edge parts of the protruding parts 11a of the brackets 10. The projecting members 19 are dropped toward and raised away from the platform 17 by driving a publicly known pneumatic cylinder or the like, not shown. The tips 19a of the projecting members 19 are pointed and are members that push directly into the brackets 10, and a central part of each projecting member 19 is a tubular part 19b.

Each tubular part 19b is inserted into a guide hole 20a in a support 20 on the head 18 side, and the constitution is such that the length of insertion can be adjusted individually for each tubular part 19b. A groove 19c is provided along the direction of insertion in a side surface of each tubular part 19b, and an end part of a screw part 21 attached to the support 20 is fitted into the groove 19c. By fitting the screw part 21 into the groove 19c, the tubular part 19b is prevented from rotating.

Once the position of insertion of the projecting member 19 has been decided, the screw part 21 is screwed tight, thus pushing the tubular part 19b against the support 20 and hence fixing the tubular part 19b. Four supports 20 that are the same as each other are provided; the positions of the supports 20 are adjusted in a sideways direction along a guiding groove, not shown, provided on the head 18 side, and then the supports 20 are fixed. Moreover, the head 18 has a constitution such that it can be moved out of the way when the brackets 10 are being placed on the platform 17. Alternatively, a constitution may be adopted in which it is the platform 17 side that is moved out of the way.

Furthermore, the projecting members 19, the supports 20 and so on can be detached to enable interchange in accordance with the form of the brackets 10. The platform 17 side is also made to be such that interchange is possible when there is a change in the constitution of the brackets 10 and the runner 14. There are many different types of bracket 10, and hence it is effective in terms of increasing production efficiency to prepare several types of platform 17 in advance. A state in which pressing has been carried out using a forming apparatus having such a constitution is shown in Fig. 19.

Pressing for undercutting is carried out on the outside edge parts of the protruding parts 11a of the brackets 10 using the projecting members 19, whereby tip parts of the protruding parts 11a are pushed out toward the recessed parts 11b as shown by the arrows. After the pressing, the approximately V-shaped grooves 11c have been reformed in the protruding parts 11a of the brackets 10. The outside edge part of each protruding part 11a already has a groove 11c formed therein at the molding stage, and is already in a state in which undercuts are provided toward the recessed parts. However, by carrying out the pressing for undercutting, the angle Y3 of the undercut parts is further increased, resulting in a reliable undercut shape. Specifically, the angle Y3 is the angle between the perpendicular plane containing perpendiculars rising up from the bottom surface of the recessed part 11b (in the case that this bottom surface is a curved surface, the tangential plane touching this curved surface), and the side surface of the protruding part 11a. The angle Y3 is 10 to 50°, preferably 15 to 45°. After the pressing has been carried out in this way and the bracket has been detached from the runner 14, the completed bracket has the shape shown in Fig. 5.

Embodiments of the present invention have been described above, but the specific constitution of the present invention is not limited to these embodiments. Regarding the shape of the bonding surface, a constitution may be adopted in which the recessed parts or protruding parts are provided in curved lines. Moreover, it goes without saying that the protruding parts may be diamond-shaped or arc-shaped. Furthermore, as an embodiment, a hook-possessing bracket has been described, with details of the arch wire attaching structure being omitted, but it goes without saying that the present invention can also be applied to other types of bracket, for example single or twin type.

A bracket manufactured using the undercut formation method according to the present invention is such that the undercut shape of the bonding surface is a reliable shape with no loss of shape occurring. As a result, the adhesiveness is stabilized and strengthened, and hence adhesion to a tooth is improved. Moreover, a bracket having an undercut bonding surface can be manufactured at low cost without requiring a special mold.

## Claims

1. An orthodontic bracket having a joining surface that is bonded to a tooth surface using an adhesive;
wherein the joining surface of said bracket has molded recessed parts and protruding parts, each of said protruding parts has an approximately V-shaped groove therein, and side walls of each of said protruding parts are expanded out toward a recessed part side via the groove, whereby said joining surface takes on an undercut shape.

2. The orthodontic bracket according to claim 1, wherein an outside edge part of each of said protruding parts is made to undergo plastic deformation by being pushed into by a pointed projecting member, whereby the approximately V-shaped groove is formed in each of said protruding parts, and side walls of each of said protruding parts are expanded out toward said recessed part side via the groove, and hence said joining surface takes on the undercut shape.

3. The orthodontic bracket according to claim 1, wherein said bracket is a plastic bracket formed from an inorganic-filler-strengthened polycarbonate.

4. The orthodontic bracket according to claim 1, wherein said bracket is a plastic bracket formed from an inorganic-filler-strengthened polyamide.

5. The orthodontic bracket according to claim 1, wherein the angle of the undercut shape of said joining surface is 10 to 50°.

6. The orthodontic bracket according to claim 3, wherein said bracket is a plastic bracket formed from a polycarbonate having an inorganic filler content of 5 to 20% by weight.

7. The orthodontic bracket according to claim 4, wherein said bracket is a plastic bracket formed from a polyamide having an inorganic filler content of 10 to 25% by weight.

8. The orthodontic bracket according to any one of claims 1, 2, 3, 4, 5, 6 and 7, wherein on the joining surface of said bracket, the grooves formed by said protruding parts being pushed into are formed in a parallel line shape or a cross shape.

9. A method of manufacturing an orthodontic bracket, wherein a method of manufacturing a joining surface of a plastic bracket that is bonded to a tooth surface using an adhesive for orthodontic treatment comprises:
a molding step of molding the joining surface of said bracket such that the joining surface has recessed parts and protruding parts, and each of said protruding parts has a groove therein; and
an expanding step of expanding out side walls of each of said protruding parts toward said recessed part side by pushing via the groove, whereby undercuts are formed in said joining surface of said bracket.

10. The method of manufacturing an orthodontic bracket according to claim 9, wherein the molding step of molding said joining surface includes a step of molding the joining surface by pulling off a mold at the undercut parts in a direction perpendicular to said joining surface.

11. The method of manufacturing an orthodontic bracket according to claim 9, wherein said molding step and said expanding step are steps in which a joining surface is formed on each of a plurality of brackets attached to a runner.

12. The method of manufacturing an orthodontic bracket according to claim 9, wherein
said molding step is a step of pushing an outside edge part of each of said protruding parts with a pointed projecting member to give plastic deformation thereto, and thus forming an approximately V-shaped groove in each of said protruding parts; and
said expanding step is a step of pushing the outside edge part of each of said protruding parts with the pointed projecting member, thus expanding out side walls of each of the protruding parts toward said recessed part side.

13. The method of manufacturing an orthodontic bracket according to claim 12, wherein said molding step and said expanding step are steps of heating said pointed projecting members, so that the outside edge parts of said protruding parts are pressed into or the side walls of said grooves are pressed out to cause the expansion.
